(19)

**Europäisches Patentamt**
**European Patent Office**
**Office européen des brevets**

(11) **EP 4 610 690 A1**

(12) **EUROPEAN PATENT APPLICATION**

(43) Date of publication:
**03.09.2025 Bulletin 2025/36**

(21) Application number: **24160609.4**

(22) Date of filing: **29.02.2024**

(51) International Patent Classification (IPC):
*G01S 7/03* (2006.01)    *G01S 7/35* (2006.01)
*G01S 13/34* (2006.01)    *G01S 13/44* (2006.01)
*G01S 13/58* (2006.01)    *G01S 13/931* (2020.01)
*G01S 13/02* (2006.01)

(52) Cooperative Patent Classification (CPC):
**G01S 7/032; G01S 7/03; G01S 7/358; G01S 13/34;**
**G01S 13/4454; G01S 13/584; G01S 13/931;**
G01S 2013/0236

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Petrov, Nikita**
**5656 AG Eindhoven (NL)**
• **Ciacci, Massimo**
**5656 AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **RADAR UNIT, CIRCUIT FOR A RADAR TRANSCEIVER AND METHOD THEREFOR**

(57)    A radar unit comprising a radar transceiver (200) comprising: a reference local oscillator (228); and at least two transmitter paths, arranged to transmit the reference LO (228), one of which has a frequency shift of at least the ADC sampling frequency. A receiver is coupled to two receiver paths, comprising a down-conversion circuit (206) configured to receive a reflected radar signal, and the reference signal and provide a down-converted baseband signal to a band-pass filter (209), an ADC (210) and a DSP (208) configured to process the digital form of the down-converted, filtered, baseband signal. A frequency shifter circuit (229) applies a frequency shift to the reference signal that shifts the transmit signals an amount where a first down-converted baseband signal is passed by a first bandpass filter in the first receiver path and a second down-converted baseband signal is passed by a second bandpass filter in a second receiver path.

FIG. 2

**EP 4 610 690 A1**

# EP 4 610 690 A1

**Description**

<u>Technical Field</u>

The technical field relates to a radar unit, a transceiver circuit and a method for signal processing. The invention is applicable to, but not limited to, utilization of quadrature 'I' and 'Q' branches of a radar receiver (Rx) for supporting different transmitter (Tx) antennas (or sets of Tx antennas) with simultaneous transmission.

<u>Background</u>

The simplest radar unit consists of a single, static transmit antenna and a single static receive antenna. Such a radar unit provides information on a distance between the radar unit and other objects, as well as being able to calculate absolute velocity of those objects within a radar range. However, such a simple radar unit is unable to distinguish from which angular direction the object is detected. In order for radar units to additionally obtain angular information, the following solutions are known. In a radar application, on say a ship, a directive transmit and/or a directive receive antenna may be mechanically rotated to additionally obtain angular information. Alternatively, in other radar units, transmit and/or receive antennas may consist of an array of antenna elements, such that transmit and/or receive 'beams' can be directed in different directions by varying phase offset between antenna elements.

It is known that some radars utilize linearly frequency modulated chirps as a sensing signal and mix the received chirp signal with the transmitted replica in order to produce a beat signal that contains information about target range in its frequency, referred to as 'beat frequency'. Some conventional radar transceivers utilize quadrature (IQ) receivers (Rx), that have two receiver branches per receiver antenna, which in theory should double the acquired frequency interval of the measured beat frequencies from $f_b \in [0, f_s/2]$ up to $f_b \in [0, f_s]$, where $f_s$ is the analog-to-digital converter (ADC) sampling frequency in each ('I' and 'Q') branch. In practice, the full utilization of the complex ADC bandwidth is difficult to achieve due to hardware imperfections (e.g., IQ imbalance/non-orthogonality), which leads to an image rejection ratio in the order of 30-40dB. This image rejection ratio range is unacceptable for distance measurements in most practical millimetre wave (mmw) radar units, where a high dynamic range is required (in the order of 60-100dB, due to path loss at mm-wavelengths). This is typically driven by the limitation of the current technology limit and by the coupling at the radio frequency (RF) for the compact size of the device.

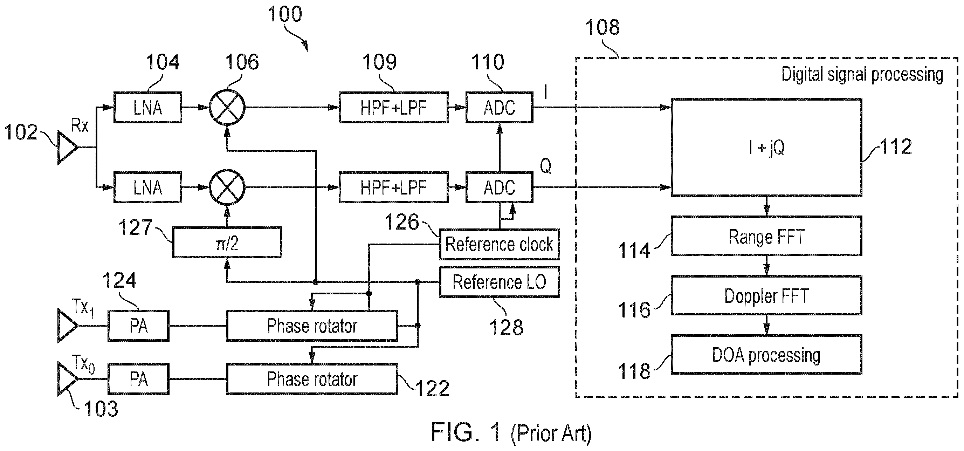

Referring now to FIG. 1, a known radar unit 100 is illustrated that operates at mmw frequencies, where radar signal processing uses a direct implementation of a quadrature (IQ) receiver and is based on a linear Frequency modulated continuous wave (FMCW) transmit and receive system. The known radar unit 100 comprises one or several receiving antennas 102 for receiving radar signals and two or more antennas 103 for transmitting FMCW radar signals created by processing the high frequency reference Local Oscillator (Ref LO) signal 128 with phase rotators 122 programmed by dedicated circuitry, in order to impress any modulation and in particular a frequency shift to one of the two transmitters. The phase rotators 122 apply a predefined additional phase shift per transmit (Tx) channel/antenna. The high frequency signals are then passed to power amplifier circuit 124 that amplifies the radar transmit signals and routes them to the two transmitter antenna(s) 103, thereby resulting in a FMCW transmission with additional modulation realized by phase rotators 122. The number of antennas used may depend on the number of radar receiver and transmitter channels that are supported/implemented in a given radar unit.

The receiver includes receiver front-end circuitry, effectively providing a low noise amplification circuit 104, frequency conversion in down-mixer circuit 106 (operably coupled to Ref LO 128), and filtering (which in this example is band-pass filtering circuit with a high-pass filter (HPF) and low-pass filter (LPF) 109. In this IQ receiver implementation, the received signal is shown as being divided into two receiver paths, which are then down-converted by down-mixer circuit 106 that implements a 90-degree phase shift 127 on one path of the reference signal provided by Ref LO 128. The reference clock of the reference clock circuit 126 controls the phase rotation of the Tx phase rotator. Finally, both down-converted IQ received signals are input to an analog-to-digital converter circuit 110 to convert the received analog radar signal into a digitized version and provide the digitized version to a digital signal processor (DSP) 108. The DSP processes the received and digitized symbols with known transmitted symbols to derive the radar information on, for example, range and velocity of detected objects. In this known standard IQ receiver radar unit 100, the DSP 108 includes a quadrature summation circuit 112 that sums I+jQ receiver signal. In theory, this could provide double the maximum range of a real (say, only an 'I' branch) receiver. However, in practice, due to IQ imbalance and other imperfections in the received signal, the visibility of far targets with a low signal-to-noise ratio (SNR) of the received radar signal is not feasible/achievable, below the spurs of close strong targets. Hence, doubling of maximum range with real hardware is not possible. The quadrature summation circuit 112 then passes the summed received radar signal to a circuit or function that performs a range fast fourier transform (FFT) 114 on the IQ signal, followed by a doppler FFT 116 and DOA processing 118.

An alternative known technique is for the DSP 108 to employ a Hilbert filter (not shown) between the quadrature summation circuit 112 and the range FFT 114. A use of a Hilbert filter is able to combine coherently the positive and negative spectrums, after which the negative part is removed (in that the real part of the signal is taken without loss of SNR). Therefore, the noise figure is improved (+3 dB) by coherent combination of two IQ branches in the positive part of the spectrum (where the real radar targets are expected).

Radar systems operating with multiple Tx and multiple Rx channels are called multiple-input multiple-output (MIMO) radars. It is known that rather than sequentially scanning in each direction, angular scanning time for radar applications can be minimized by applying MIMO schemes. A dedicated decoder may be employed such that angular information can be retrieved by post-processing of the received signal(s). A realization of MIMO radar comes with a challenge of allocating sufficient time-frequency resources of a transmission waveform, to accommodate each transmitter in such a way, that they can be discriminated upon reception.

Known MIMO radar multiplexing schemes, considered to operate 'K' Tx channels, include:

1) Time division multiplexing (TDMA), which separates Tx channels in the time domain. TDMA limits an instantaneous transmitted power to that of a single Tx, which is not the case for other schemes, and decreases the unambiguous velocity interval by factor 'K'.

2) Doppler division multiplexing (DDMA), which separates Tx signals via a Doppler shift and therefore leads to the same unambiguous velocity interval degradation as TDMA.

3) Range division multiplexing (RDMA), which separates Tx channels by using a large range (or beat frequency) offset and thus degrades the maximum measurable distance by factor K. RDMA also brings extra challenges for direct Tx-Rx coupling suppression (where a simple high-pass filter may be substituted with a multi-notch filter) and possible presence of range ambiguities.

4) (Range) circulating linearly frequency modulation (LFM), which is yet another approach to realize MIMO radar. Here, it is typical to place Tx's in adjacent range cells, which directly degrades the range resolution by a factor 'K' and requires high accuracy phase rotators for hardware implementation.

5) Code division multiplexing (CDMA) may also be realized in slow-time or fast-time or both. In all three cases, the observation time, determined by the system update requirements, limits the total code duration and poses limitations to the achievable dynamic range of the system, given that the signal processing is a linear transform. Direct leakage cancellation for fast-time coding appears as another issue of this approach. Despite some improvement in dynamic range that can be obtained with non-linear signal processing, this operation is typically significantly more computationally costly that conventional two-dimensional (2D) fast fourier transform (FFT) range-Doppler processing.

The inventors have recognised and appreciated that a realization of a practical radar unit comes at a cost of degrading some performance of a range-Doppler image, as compared to a single Tx operation (phased array radar).

US20210173069A1 describes a transmit scheme with a small frequency shift, such that it can be captured by an ADC without an additional mixer or change of the reference frequency. A dedicated multi notch filter is required in order to remove bumper response and leakage. US20080112519A1 describes a circuit that uses multiple reference LO to sample different parts of the spectrum. Mixing is performed with a tone and both 'I' and 'Q' branches serve to capture data in each sub-band.

Accordingly, there is a desire for an improved radar unit, a circuit and a method to utilize two, e.g., 'I' and 'Q', branches of a radar receiver for supporting different Tx antennas (or sets of Tx antennas) with simultaneous transmission.

<u>Summary</u>

Examples herein described provide a radar unit, and a circuit and a method therefor, as described in the accompanying claims. Specific embodiments are set forth in the dependent claims. These and other aspects will be apparent from and elucidated with reference to the embodiments described hereinafter.

<u>Brief description of the drawings</u>

Further details, aspects and embodiments will be described, by way of example only, with reference to the drawings. In the drawings, like reference numbers are used to identify like or functionally similar elements. Elements in the figures are illustrated for simplicity and clarity and have not necessarily been drawn to scale.

FIG. 1 illustrates a simplified block-diagram of a known quadrature (IQ) transceiver.

FIG. 2 illustrates a simplified example block-diagram of a radar transceiver, adapted according to examples herein described.

FIG. 3 illustrates various example implementations of a frequency shifter circuit according to examples herein described.

FIG. 4 illustrates further various example implementations of a frequency shifter circuit according to examples herein described.

FIG. 5 illustrates an example flowchart of a quadrature (IQ) multiplexing transceiver, adapted according to examples herein described.

FIG. 6 illustrates a series of example spectra of a beat signal for IQ MIMO (the top spectrum being full IQ receiver without a baseband mixer; the middle spectrum being an 'I' branch; and the bottom spectrum being a 'Q' branch after a baseband mixer, adapted according to examples herein described.

FIG. 7 illustrates an example plot of a beamforming DOA estimation for a point target with two Tx by one Rx MIMO radar using IQ MIMO scheme according to examples herein described.

Detailed description

A motivation for alleviating the aforementioned problems with IQ receivers is, with an ideal IQ receiver with infinite separation, it would be possible to utilize a negative spectrum of the received radar signal in order to double a maximum radar range (e.g., use the folding portion of the digital spectrum to represent frequencies [0, f_s]) and thus obtain double the sampling frequency, as compared to a real receiver that uses [0, f_s/2]. However, in practice and due to the high path loss at mm-wave frequencies (of the order of 70-100 dB at maximum radar range), that would imply that the radar targets at the ranges at high beat frequencies [f_s/2, f_s] would be much weaker than the ones at the close ranges. The inventors have recognised and appreciated that this dictates high IQ isolation requirements for detecting these targets below the IQ imbalance image of the signals in the close range [0, f_s/2].

In order to address these requirements, it is proposed to avoid having these large power difference between two frequency intervals, i.e., [0, f_s/2] and [f_s/2, f_s], by using such frequency intervals to acquire data from (at least) two transmitters (or sets of transmitters), between which the power difference should be minimal. In particular, for example, a typical dynamic range requirement in a 'distance' dimension is of an order of 70 dB, whilst the inventors have recognised and appreciated that for an 'angular' dimension it is around 30 dB, determined by array calibration accuracy and RF imperfections. It is important to note that this rejection ratio is typically unacceptable in distance domain due to significant receive power variation vs target range according to radar equation at mm waves. The same 30-40 dB rejection ratio is typically sufficient in the angular domain, where RF impairments bound the dynamic ranges by similar values. Thus, the inventors have recognised and appreciated that by adding IQ imbalance limitation to this domain, there is no degradation in the system performance.

Thus, examples herein described propose a radar unit, a circuit and a method to utilize substantially a full band [0, $f_s$] of a complex ADC, realized via, say, 'I' and 'Q' down-conversion branches with limited isolation/imbalance between them. In examples, the 'I' and 'Q' branches of a radar receiver are also used to support different Tx antennas (or sets of Tx antennas) having simultaneous transmissions. In this example the IQ receiver with ADC with sampling frequency f_s captures signal components corresponding to both Tx-1 and Tx-2 such that each of them occupies a band of fs/2, without compromising on range and Doppler dynamic range (i.e., without any loss in pre-detection signal-to-noise ratio (SNR)). The proposed approaches comprise using a frequency shift in a set of transmitter signals in such a way that they are rejected by the receiver band-pass filters in one branch (I) but can be observed in the other branch (Q), after removing the applied frequency shift, by an additional mixer located in this (Q) branch. Thus, a part of the Tx channels is acquired via the I branch, and the other part of Tx channels is acquired in the Q branch of every receiver. In this manner, any hardware imperfections (IQ imbalance/non-orthogonality) are therefore moved to the angular processing domain, where requirements for dynamic range are weaker and thus the IQ hardware imperfections are not critical (or in the same order or below other imperfections, such as array coupling).

To ensure separation of Tx's at the receiver, a frequency shift greater or equal to the ADC sampling frequency $\delta_f \geq f_s$ may be applied to one set of Tx's of the MIMO radar (e.g., 40 MHz), such that the received beat signal associated to this Tx channel falls outside of the acquired frequency band in one (e.g., 'I') branch. This frequency shift may be compensated with an additional analogue baseband mixer with a tone at $\delta_f$ (after mixing with the RF chirp, but before the filters in the receiver path leading to the ADC are applied). Alternatively, this frequency shift may be compensated by means of shifting the reference chirp frequency (Rx-LO) with a phase rotator in the other (Q) branch, such that the useful signal passes the High Pass Filter (HPF) and Low Pass Filter (LPF) in the same way as in the 'I' branch. In particular, direct coupling and bumper reflections are rejected by both HPF (for the wanted band) and LPF (for the unwanted band). The RF leakage combines effects due to many phenomena happening at RF frequencies. RF leakage also includes multipath reflection from the radar housing (radome and/or bumper, in case of automotive applications). Hence, bumper reflections can be seen as a particular case of RF leakage.

It is noted that some key features that differentiate the examples described herein from a conventional LFM radar with IQ receiver include, inter alia: a MIMO multiplexing scheme with frequency shift larger or equal to the ADC sampling frequency $\delta_f \geq f_s$ and the presence of an additional analogue baseband mixer in the Q branch before the bandpass (HPF/LPF) filters or shifted in frequency reference chirps in one of (I or Q) branches. In other examples, the proposed modifications can also include a baseband switch (mixing either with the tone or DC) such that the additional MIMO capabilities of the proposed scheme are disabled (e.g. for Tx beamforming mode). It is envisaged that a yet further implementation may also incorporate a similar baseband mixer in both 'I' and 'Q' branches for balancing their outputs.

Examples described herein create a virtual array in a MIMO radar, by associating the received signals to the transmitter from which the transmit radar signal was emitted. In this context, a virtual array may be viewed as an abstraction that describes a phased array that would provide an equivalent phase response of the target to that obtained by coherent combing MIMO channels together. Thus, a combination of a MIMO waveform, and specific signal processing for linearly frequency modulated (LFM) signals, is designed to use a separation in a virtual antenna of co-located Tx and Rx arrays. For co-located arrays, the spatial convolution of Tx and Rx arrays creates a virtual array with more virtual elements than physical channels. Thus, a virtual array has a higher angular resolution and/or has fewer grating lobes than Tx and Rx arrays separately.

In some examples, an additional baseband mixer or an additional phase rotator may be used to bring the signal from another Tx (or set of Tx's) in the pass-band of the ADC in a receiver having a DSP configured to perform stretch processing. The DSP configured to perform stretch processing (which may be referred to as a de-ramping receiver or de-chirping receiver) may be realized using an IQ receiver, meaning that there are two branches per receive antenna that are coherently combined. In this manner, the radar receiver is configured to assume a transmission of a frequency modulated signal (typically linearly frequency modulated signal, e.g., a chirp signal) and mixing the received signal with the transmitted chirp in the receiver. In this scenario, the information about the target range is then embedded in the beat frequency difference between Tx and Rx chirps (where the Rx signal is a linear combination (e.g., summation) of multiple response of point-like targets and each individual point target response is a time delayed and scaled copy of the Tx RF chirp). In this manner, the information about the target range can be captured with an ADC operating at a sampling frequency that is significantly smaller than the bandwidth of the chirp (typically factor 2-50 depending on the application). Although examples are described herein with regard to radar units operating in the mmwave frequency range, it is envisaged that the concepts described herein will operate across a very wide frequency range, e.g., 1MHz to 1THz.

In a first aspect, a radar unit is described that comprises a transceiver having a reference local oscillator, Ref LO, configured to generate a reference signal; a reference clock circuit configured to output a clock signal; and at least two transmitter paths, wherein each transmitter path comprises a phase rotator configured to receive the reference signal and the clock signal, wherein the clock signal rotates a phase of the reference signal in at least one transmitter path, wherein a first frequency modulated continuous wave, FMCW, radar signal in a first transmitter path is shifted by a sampling frequency, Fs, with respect to a second FMCW radar signal in a second transmitter path. Each of the at least two transmitter paths comprise a power amplifier configured to amplify the respective first FMCW radar signal or second FMCW signal and apply the amplified FMCW radar signal to a respective first transmit antenna and second transmit antenna. At least one receiver is coupled to a receive antenna that receives a reflection of the FMCW radar signal, the receive antenna coupled to two receiver paths. A down-conversion circuit coupled to the Ref LO is configured to down-convert the reflected FMCW radar signal in each receiver path to a baseband signal. The down-conversion circuit comprises a frequency shifter circuit located in a first receiver path and configured to apply a frequency shift to either the received reflection of the FMCW radar signal or one path of the reference signal that down converts the reflection of the FMCW radar signal in the first receiver path to a baseband signal of a frequency band represented by the FMCW transmit signal, following a frequency shift applied by the phase rotator. A band-pass filter is configured to filter the baseband signal in each receiver path, wherein a first bandpass filter in a first receiver path is configured to pass the baseband signal and a second bandpass filter in a second receiver path is configured to pass the baseband signal of the second transmitter path after an applied frequency shift has been removed. An analog to digital converter, ADC, circuit is configured to convert the filtered baseband signal in each receiver path to digital form; and a digital signal processor, DSP, operably coupled to the at least one receiver is configured to process the digital form of the filtered, baseband signal and determine an angular dimension of the received reflected radar signal in response thereto.

In a second aspect, a method of receiving two transmit radar signal in a radar unit is described, the method comprising generating a reference signal by a reference local oscillator, Ref LO; rotating, by a clock signal applied to a phase rotator, a phase of the reference signal in one of at least two transmitter paths that provides frequency modulated continuous wave, FMCW, radar signals where the signal of a first transmitter is shifted by a sampling frequency, Fs, with respect to a second transmitter. The method further comprises amplifying and transmitting a first FMCW radar signal from a first transmit antenna and a second FMCW radar signal from a second transmit antenna; receiving a reflected radar signal and amplifying the received reflected radar signal in two receiver paths. The method further comprises down-converting the received amplified reflected radar signal in the two receiver paths, to baseband signals using the reference signal, comprising: applying a frequency shift to either the received reflection of the FMCW radar signal in a first receiver path; or applying a frequency shift to the reference signal that down converts the reflection of the FMCW radar signal in the first receiver path. The frequency shift shifts the reflection of the FMCW radar signal to a baseband signal of a frequency band represented by the FMCW transmit signal following a frequency shift applied by the phase rotator that compensates the shift applied in one of the transmit FMCW radar signals. The method further comprises band-pass filtering the baseband signals, wherein a first down-converted baseband signal of the received reflected radar signal is passed by a first bandpass filter in the first receiver path and a second down-converted baseband signal of the received reflected radar signal is passed by a second bandpass filter in a second receiver path; analog to digital converting the down-converted, filtered, baseband signal; and digitally processing a digital form of the down-converted, filtered, baseband signal.

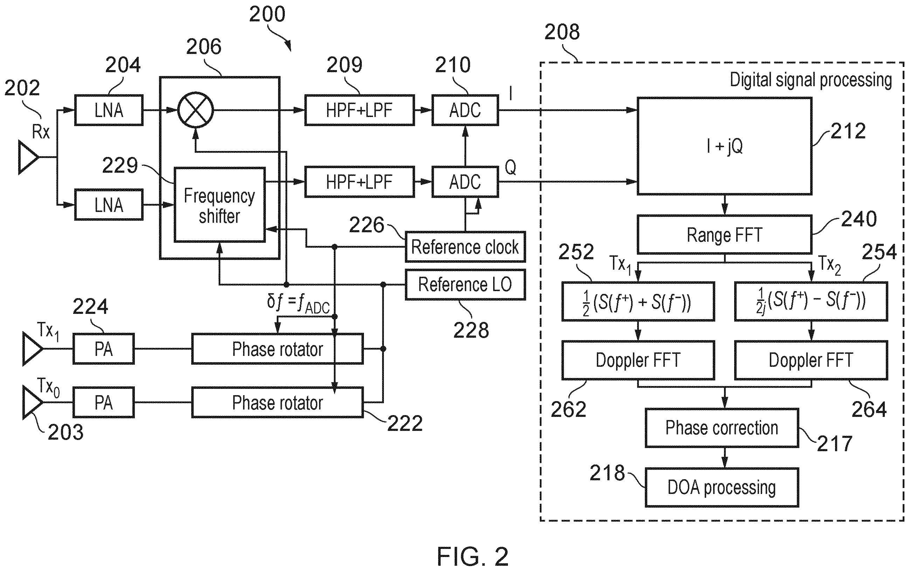

Referring now to FIG. 2, a simplified example block-diagram of a radar unit is illustrated having an example radar transceiver 200 configured to operate at mmw frequencies, adapted according to examples herein described. The radar unit contains one receiving antenna 202 for receiving radar signals and two or more transmitter antenna 203 for transmitting FMCW radar signals with additional modulation realized by phase rotators 222 generated by reference local oscillator (Ref. LO) 228 with additional modulation realized by phase rotators 222, which is then passed to power amplifier circuit 224 that amplifies the radar transmit signals and routes them to the multiple (e.g., two) transmitter antenna(s) 203. In one example, in response to a reference clock signal from the reference clock circuit 226 applied as a phase ramp at a clock rate to a phase rotator 222, a phase of the reference LO signal 228 in one of at least two transmitter paths is rotated. Thus, both phase rotators 222 are controlled with a control sequence synchronously aligned with the refence clock signal. However, a first phase rotator is configured to apply a phase to realize a frequency shift and the second phase rotator is configured to apply always a constant phase (and therefore no frequency shift). In this manner, a frequency modulated continuous wave, FMCW, radar signal is created, where the signal of a first transmitter is shifted by a sampling frequency, Fs, with respect to a second transmitter. The vertical arrow shows the clocking of the phase rotators by the reference clock signal, whilst the arrow with frequency offset of the clock provides a control input.

The receiver includes receiver front-end circuitry operably coupled to receiver antenna 202, effectively providing low noise amplification circuit 204. In this IQ receiver implementation, the received signal is shown as being divided into two receiver paths, which are then down-converted by down-conversion circuit 206 that implements a frequency/phase shift by frequency shifter 229 on one path of the reference signal provided by Ref LO 228. The down-conversion circuit 206 outputs a down-converted radar signal to a baseband filter 209 (which in this example is band-pass filtering circuit with a high-pass filter (HPF) and low-pass filter (LPF)). Finally, both down-converted IQ received radar signals are input to an analog-to-digital converter (ADC) circuit 210 to respectively convert the received IQ-converted into an analog radar signal into a digitized version and provide the digitized version to a digital signal processor (DSP) 208. A refence clock signal of the reference clock circuit 226 is coupled to the ADC circuit 210 and the frequency shifter 229 and configured to synchronize the ADC sampling, the frequency shift applied per phase rotator on Tx and the frequency shift applied by the frequency shifter in the Rx. As will be appreciated by a skilled artisan, the Ref LO 228 should operate in radio frequency (e.g. in this example at 77 GHz), whilst the reference clock should be configured to operate at a sampling rate of the ADC circuit 210, e.g., at 40 MHz or 80 MHz.

The DSP processes the received and digitized symbols with known transmitted symbols to derive the radar information on, for example, range and velocity of detected objects. In this known standard IQ receiver radar unit, the DSP 208 includes a quadrature summation circuit 212 that sums I+jQ receiver signal. In order to correct IQ imbalance and other imperfections, the DSP 208 has been amended as follows.

The quadrature summation circuit 212 then passes the summed received radar signal to a circuit or function that performs a range fast fourier transform (FFT) 240 on the IQ signal and splits the output FFT signal into two spectral parts, namely positive spectrum S+ and negative spectrum S-, that are then combined by algebraic operators 252 and 254 of the range FFT respectively, where each circuit /function corresponds to a particular Tx channel utilized. In some examples, the signal processing performed by range FFT 240 of both 'I' and 'Q' branches can be performed using a single FFT by combing the signals as real and complex part and separating them after FFT using the property of Fourier transform, namely:

$$F\big(Re(s(t))\big) = \tfrac{1}{2}\big(S(f^+) + S^*(f^-)\big); \qquad\qquad [1]$$

$$F\big(Im(s(t))\big) = \tfrac{1}{2j}\big(S(f^+) - S^*(f^-)\big), \qquad\qquad [2]$$

where $S(f) = F(s(t))$ are the frequency and time representation of the signal, $()^*$ denotes the complex conjugate and $S(f^+)$, $S(f^-)$ denote the positive and negative parts of the spectrum respectively.

Thus, the frequency shifter circuit 229 is then adapted, based on this processed information. In this manner, the processed information is used for the dual purpose of combining down-conversion for the LO as well as the demodulation of the applied frequency shift in the $Tx_1$. The positive $S^+$ algebraic operator 252 and negative $S^-$ algebraic operator 254 of the spectrum of the range FFT 240 are followed by respective doppler FFTs 262, 264, a phase correction circuit 217 that digitally corrects the phase difference between channels due to applied on Tx frequency and possibly phase offset. The received IQ range and doppler FFT's signals are then passed to a DOA processing circuit 218.

In some examples, the transmitted signal proposed herein may be similar to a frequency (or range) division multiplexing scheme (FDMA), where it is configured to exploit a much higher frequency shift relatively to the ADC sampling frequency $f_{ADC}$. Here, the proposed IQ receiver uses $\delta_f \geq f_{ADC}$, while range division multiplexing employs a frequency shift smaller than $\delta_f \leq f_{ADC}/K$ or even $$\delta_f \leq \frac{f_{ADC}}{2K}$$ for only real receiver, where $K$ is the number of Tx channels utilized in this (MIMO) mode.

In some examples, a range-dependent correction of the phase term $-2\pi\delta_f\tau(t)$ may be performed after range FFT 240 with an estimated value of $\tau$ per range cell and neglecting target displacement within one chirp. In some examples, a skilled artisan will appreciate that it may be performed in a manner similar to an approach in FDMA processing for range DOA decoupling. Here, in some examples, the phase correction may also compensate for any additional phase shifts that are introduced in the signal either on Tx side (e.g., by PR) or in the receiver baseband mixer.

The applied modulation on the Tx side, and the baseband mixer input in the Rx side, may be different from a pure cos tone that has been considered before. Both of these signals may have some harmonics (e.g. a square wave) due to limited hardware accuracy or update rate of PR or analogue implementation of the baseband mixer (e.g. by means of switching the sign, that is equal to mixing with a square wave). It is envisaged that in some examples there may be a minor difference in performance when mixing is performed with a square wave instead of a cos wave.

In some examples, it is envisaged that the proposed IQ receiver may be a multiple input single output (MISO) system, that corresponds to a single Rx channel. In some examples, it is envisaged that the proposed IQ receiver may be a multiple input multiple output (MIMO) system, that corresponds to multiple Rx channel. In some examples, the proposed IQ receiver concept employs the frequency shifter 229 in the 'Q' branch that is used to shift the spectrum of the transmitter that has an additional frequency shift in the baseband band-pass filters 209, implemented by HFP and LPF and acquired by the ADC circuit 210.

It is also envisaged that in other examples, it may be possible to utilise two chirp generators (e.g., phase locked loop (PLLs) as respective Ref LOs 228) running synchronously and simultaneously with a required frequency shift $\delta_f$ applied by frequency shifter 229 in both I and Q branches of the receiver. These waveform generators can be also placed in different integrated circuits (ICs) that are remotely synchronized for coherent operation. In this example, the phase rotators 222 creating the frequency shift on the two Tx paths can be omitted.

The principle of FIG. 2 of the proposed transmitting scheme, receiver structure and digital signal processing can be expressed with no loss of generality with an example of a single chirp and two Tx channels operating in IQ MIMO mode. More Tx channels can be multiplexed by means of combining IQ MIMO with other multiplexing schemes, e.g. TDMA, DDMA, FDMA, CDMA, etc. Assume a MIMO radar with $K = 2$ simultaneously active channels emit a chirp (from each Tx) of time duration $T$ and bandwidth $B$ at the carrier frequency $f_c$:

$$s_{tx}(t,k) = \cos\left(2\pi\left(f_c t + \frac{\beta}{2}t^2 + \delta_f k t\right)\right) = \cos\left(\psi(t) + 2\pi\delta_f k t\right), \qquad t \in [0, T], \qquad k = \{0, 1\},$$

[3]

where $\beta = B/T$ is the chirp slope, $\psi(t) = 2\pi\left(f_c t + \frac{\beta}{2}t^2\right)$ is a phase of a reference chirp at the carrier frequency and k defines the index of transmitter.

To demonstrate a principle of operation, a single Rx channel (MISO) is considered, whilst a skilled artisan will recognise that generalization for multiple Rx channels operation is straightforward. The transmitters that utilize the proposed IQ multiplexing are spaced by distance $d$ in the plane where the target angle $\varphi$ is measured. The response of a target at the time delay located at time delay $\tau(t) = 2r(t)/c$, where $r(t)$ is the distance to the target as the function of time and c is the speed of light, then becomes:

$$s_{rx}(t) = \alpha \sum_{k=0}^{K-1} \cos\left(2\pi\left(f_c\big(t - \tau(t)\big) + \frac{\beta}{2}\big(t - \tau(t)\big)^2 + \delta_f k\big(t - \tau(t)\big) + \frac{dk}{\lambda}\sin(\varphi)\right)\right)$$

$$[4]$$

$$= \alpha \sum_{k=0}^{K-1} \cos\left(\psi(t) + 2\pi\left(-f_c\tau(t) + \frac{\beta}{2}\big(\tau(t)\big)^2 - \beta\tau(t)t + \delta_f k\big(t - \tau(t)\big) + \frac{dk}{\lambda}\sin(\varphi)\right)\right)$$

$$= \alpha \sum_{k=0}^{K-1} \cos(\psi(t) + \eta_k(t)),$$

$$[5]$$

Where: $\eta_k(t)$ is the baseband phase of Rx signal from Tx $k$, $\lambda$ is the wavelength at the carrier frequency and $\alpha$ is a constant proportional to the complex back-scattering coefficient of the target, propagation loss and other constant terms. The received RF signal is mixed with the reference RF chirp in the IQ mixer:

$$s_{mix}^I(t) = \alpha \sum_{k=0}^{K-1} \cos(\psi(t) + \eta_k(t))\cos\big(\psi(t)\big) = \frac{\alpha}{2}\sum_{k=0}^{K-1} \cos(\eta_k(t)) + \cos(2\psi(t) + \eta_k(t));$$

$$[6]$$

$$s_{mix}^Q(t) = \alpha \sum_{k=0}^{K-1} \cos(\psi(t) + \eta_k(t))\cos\left(\psi(t) + \frac{\pi}{2}\right)$$

$$= \frac{\alpha}{2}\sum_{k=0}^{K-1} \cos\left(\eta_k(t) - \frac{\pi}{2}\right) + \cos\left(2\psi(t) + \eta_k(t) + \frac{\pi}{2}\right).$$

$$[7]$$

The second term in both I and Q chains corresponds to double the carrier frequency and it is filtered out by the receiver chain. For simplicity assume that LPF in both branches has a cut-off frequency at $f_{cut}^{LPF} = f_{ADC}/2$ and that the signals in the suppression band are sufficiently rejected. Then the filtered signal in I branch becomes:

$$s_{fil}^I(t) = \frac{\alpha}{2}\cos(\eta_0(t)) = \frac{\alpha}{2}\cos\left(2\pi\left(-f_c\tau(t) + \frac{\beta}{2}\big(\tau(t)\big)^2 - \beta\tau(t)t\right)\right), \qquad [8]$$

which corresponds to the beat signal corresponding to Tx-0.

The signal in the 'Q' branch goes to the second mixer, which affects only the low-frequency component (the double carrier frequency is removed by the receiver chain). The second mixer mixes the signal with the tone $\cos(2\pi\delta_f t)$ and its output is:

$$s^Q_{mix2}(t) = \frac{\alpha}{2}\sum_{k=0}^{K-1}\cos\left(\eta_k(t) - \frac{\pi}{2}\right)\cos\left(2\pi\delta_f t\right)$$

$$= \frac{\alpha}{2}\sum_{k=0}^{K-1}\cos\left(\eta_0(t) + 2\pi\left(\delta_f k\left(t - \tau(t)\right) + \frac{dk}{\lambda}\sin(\varphi)\right) - \frac{\pi}{2}\right)\cos\left(2\pi\delta_f t\right)$$

$$= \frac{\alpha}{4}\left(\cos\left(\eta_0(t) - \frac{\pi}{2} - 2\pi\delta_f t\right) + \cos\left(\eta_0(t) - \frac{\pi}{2} + 2\pi\delta_f t\right)\right.$$

$$+ \cos\left(\eta_0(t) + 2\pi\left(2\delta_f t - \delta_f k\tau(t) + \frac{dk}{\lambda}\sin(\varphi)\right) - \frac{\pi}{2}\right)$$

$$\left. + \cos\left(\eta_0(t) + 2\pi\left(-\delta_f k\tau(t) + \frac{dk}{\lambda}\sin(\varphi)\right) - \frac{\pi}{2}\right)\right),$$

$$[9]$$

where the first three components correspond to target response $\eta_0(t)$ shifted in frequency by $\delta_f$ and $2\delta_f$ respectively. These components should be suppressed by the low-pass filter and anti-aliasing filter of ADC that captures the data with spectrum in $\left[-\frac{f_{ADC}}{2}, \frac{f_{ADC}}{2}\right]$. Only the last component is therefore captured by the ADC after the filters in the Q branch, which is:

$$s^Q_{fil}(t) = \frac{\alpha}{4}\cos\left(\eta_0(t) + 2\pi\left(-\delta_f k\tau(t) + \frac{dk}{\lambda}\sin(\varphi)\right) - \frac{\pi}{2}\right)$$

$$= \frac{\alpha}{4}\cos\left(2\pi\left(-f_c\tau(t) + \frac{\beta}{2}\left(\tau(t)\right)^2 - \beta\tau(t)t - \delta_f k\tau(t) + \frac{d}{\lambda}\sin(\varphi)\right) - \frac{\pi}{2}\right).$$

$$[10]$$

The signal in Q branch appears at the same beat frequency as in the I branch and thus passed LPF and HPF in a similar manner (with the same amplitude and phase response). The phase of the signal in the Q branch contains information about target angle as observed from Tx-1 and thus can be used for angular processing.

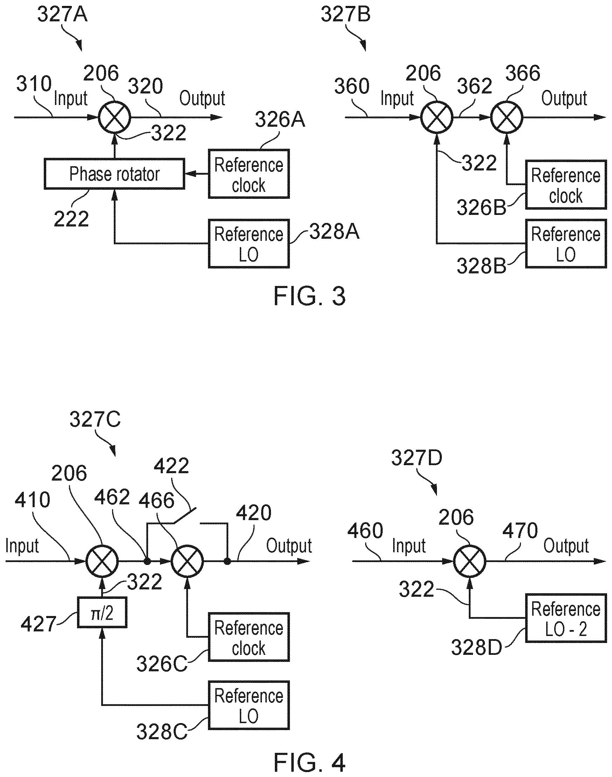

It is envisaged that the frequency shifter 229 can be implemented in a number of, ways as illustrated in FIG. 3 and FIG. 4 and as described below. Referring now to FIG. 3, various example implementations of a frequency shifter circuit are illustrated according to examples herein described. A first example frequency shifter circuit 327A illustrates an input radar receive signal 310 that is provided to a down-conversion circuit 206. A suitably-configured down-conversion signal 322, say configured by DSP 208 in FIG. 2, is created by phase rotator 222, as influenced by reference clock 326A and Ref LO 328A. In this example, the phase rotator 222 shifts the signal from the Ref LO 328A by a frequency shift dictated by the reference clock and provides this reference mixer signal to the down-conversion circuit 206. This example implementation also supports a dual mode operation (if the phase rotator 222 is set to a fixed phase shift of $\pi/2$, then this example implementation may be deemed equivalent to a conventional IQ receiver).

A second example frequency shifter circuit 327B illustrates an input radar receive signal 360 that is provided to a down-conversion circuit 206. A suitably-configured down-conversion signal 322, say configured by DSP 208 in FIG. 2, is created directly by Ref LO 328B, such that down-conversion circuit 206 outputs a baseband signal 362. The baseband signal 362 is then phase adjusted, say configured by DSP 208 in FIG. 2, by reference clock 326B applied to a (second) baseband mixer 366 in, say, the Q path operating at baseband. In this manner, a presence of an additional baseband mixer 366 in one of the quadrature branches, as compared to the example architecture of FIG. 2, the IQ receiver utilizes each branch of an IQ receiver to operate different Tx channels and thus fully utilizes the signal acquired by ADC, even in a presence of moderate impairments in the receive chain, such as IQ imbalance. It is envisaged that in some examples, an additional baseband mixer may be employed in both quadrature branches, as it is easier to calibrate the system when it is completely symmetric in terms of hardware (HW), even when the full capabilities of this HW are not used in the other branch. In such a case, having a symmetric implementation for 'I' and 'Q' branches may be beneficial for HW calibration. Notably, Rx branches of IQ receiver, together with the modulation of the transmitted chirps in some Tx channels from RF chirp generator are configured with a frequency that is equal to or larger than the ADC sampling frequency.

One benefit of the second example frequency shifter circuit 327B of FIG. 3 is the possibility to capture two sets of Tx channels simultaneously and to utilize the full ADC sampling rate of IQ pair in a presence of typical hardware impairments. Thus, practically achievable image rejection ratio (IRR) of zero-intermediate frequency (IF) or homodyne radio architecture of about 30-40 dB are moved from being a distance measurement dimension to an array or angular dimension (such that MISO or MIMO separation is only needed in DOA processing 218 in DSP).

Referring now to FIG. 4 further various example implementations of a frequency shifter circuit are illustrated according to examples herein described. A third example frequency shifter circuit 327C illustrates an input radar receive signal 410 that is provided to a down-conversion circuit 206. A suitably-configured down-conversion signal 322, say configured by DSP 208 in FIG. 2, is created by Ref LO 328C and routed through a fixed $\pi/2$ phase shift 427. A subsequent down-converted signal 462 is then selectively phase adjusted, say configured by DSP 208 in FIG. 2, by reference clock 326C applied to a second mixer 466 in, say, the Q path operating at baseband. In this example, the selective phase adjustment of the subsequent down-converted (e.g., baseband) signal is controlled via a by-pass switch 422, which in some examples is controlled by DSP 208 in FIG. 2. Thus, this example mode-selection implementation may be accomplished by control of the switch 422, which may be used to turn 'on'/'off' an IQ MIMO mode of operation (where in this example the fixed $\pi/2$ phase shift 427 facilitates backward compatibility with an ordinary IQ receiver) as an output 420. Thus, in this example, when the IQ MIMO mode is switched 'off' (thus operating in mode 1), the receiver behaves as a conventional IQ receiver, with 'I' and 'Q' branches shifted by $\pi/2$ between each other, such that they can be combined to double the range or improve the noise figure. A conventional IQ (mode 1) of operation may be beneficial in some radar modes where the field of view is limited and beamforming on Tx is used instead of MIMO mode (e.g. lane change assist (LCA) mode of corner radar). In mode 2 a couple of Tx's are operating in IQ MIMO mode simultaneously. In other examples, it is envisaged that the switch between modes can be realized in a different manner, e.g. via the control of the signal that enters the baseband mixer together with the Rx signal (e.g., between the reference clock signal and DC).

FIG. 4 also illustrates a fourth example frequency shifter circuit 327D comprising an input radar receive signal 460 that is provided to a down-conversion circuit 206. A suitably-configured down-conversion signal 322, say configured by DSP 208 in FIG. 2, is created directly by a second Ref LO 328D. In this example, it is envisaged that the signal from the second Ref LO 328D is shifted by a frequency shift of $\delta_f$ from the reference LO from say a second phase locked loop (PLL) to provide a baseband output 470.

Although examples herein described are directed to a quadrature (IQ) radar receiver, with a single Rx antenna receiving a reflected radar signal from at least two transmitter paths, which are split into the two receiver paths, it is envisaged that the concepts described herein are equally applicable to any radar unit or radar system that employs two signal receiver paths per antenna. For example, in some examples, the two receiver paths may be an ordinary IQ (phase 0 deg., 90 deg. of the Ref LO 328), or in other examples the two receiver paths may be just (phase 0 deg., 0 deg.), so long as a frequency shift is still applied.

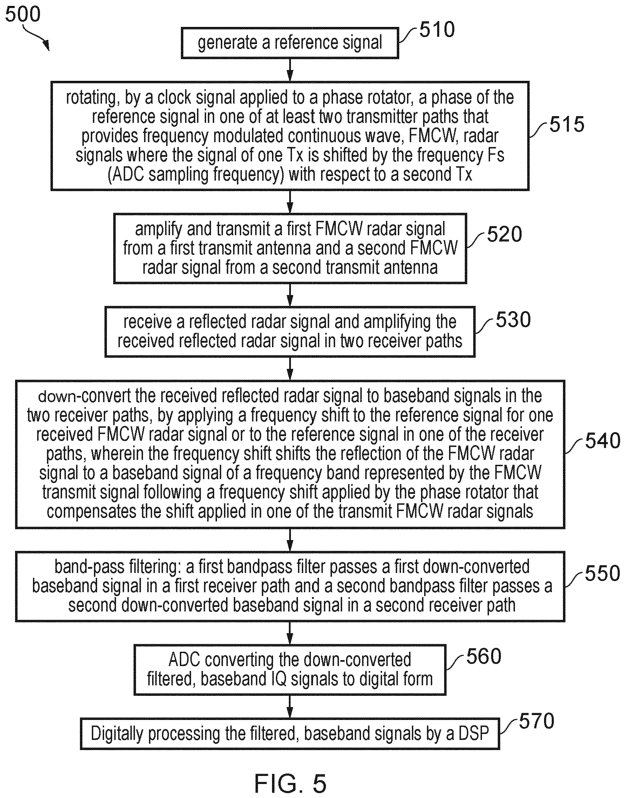

Referring now to FIG. 5, an example flowchart 500 of a radar transceiver is illustrated, which in one example includes a quadrature (IQ) receiver, is illustrated, according to examples herein described. At 510, the flowchart comprises generating a reference signal by a reference local oscillator, Ref LO, such as Ref LO 228 in FIG. 2. At 515 the flowchart comprises rotating, by a reference clock signal applied to a phase rotator, such as phase rotator 222 in FIG. 2, a phase of the reference signal in one of at least two transmitter paths that provides frequency modulated continuous wave, FMCW, radar signals where the signal of first transmitter is shifted by a sampling frequency, Fs, with respect to a second transmitter. At 520, the flowchart comprises amplifying and transmitting a first FMCW radar signal from a first transmit antenna and a second FMCW radar signal from a second transmit antenna. At 530, the flowchart comprises receiving a reflected radar signal, and amplifying the received reflected radar signal in two receiver paths. At 540, the flowchart comprises down-converting the received amplified reflected radar signal in the two receiver paths, to baseband signals using the reference signal, comprising: applying a frequency shift to either the received reflection of the FMCW radar signal in a first receiver path; or applying a frequency shift to the reference signal that down converts the reflection of the FMCW radar signal in the first receiver path; wherein the frequency shift shifts the reflection of the FMCW radar signal to a baseband signal of a frequency band represented by the FMCW transmit signal following a frequency shift applied by the phase rotator that compensates the shift applied in one of the transmit FMCW radar signals. At 550, the flowchart comprises band-pass filtering the baseband signals, wherein a first down-converted baseband signal of the received reflected radar signal is passed by a first bandpass filter in the first receiver path. Additionally, a second down-converted baseband signal of the received reflected radar signal is passed by a second bandpass filter in a second receiver path (i.e., it is configured to pass the baseband signal of the second transmitter path after an applied frequency shift has been removed). For example, after removing the frequency shift by mixing with the reference clock signal (40 MHz), the useful signals (of different Txs) in both paths are in the same frequency band. At 560, the flowchart comprises analog to digital converting the down-converted, filtered, baseband signal; and at 570 the flowchart comprises digitally processing a digital form of the down-converted, filtered, baseband signal.

*Simulations*

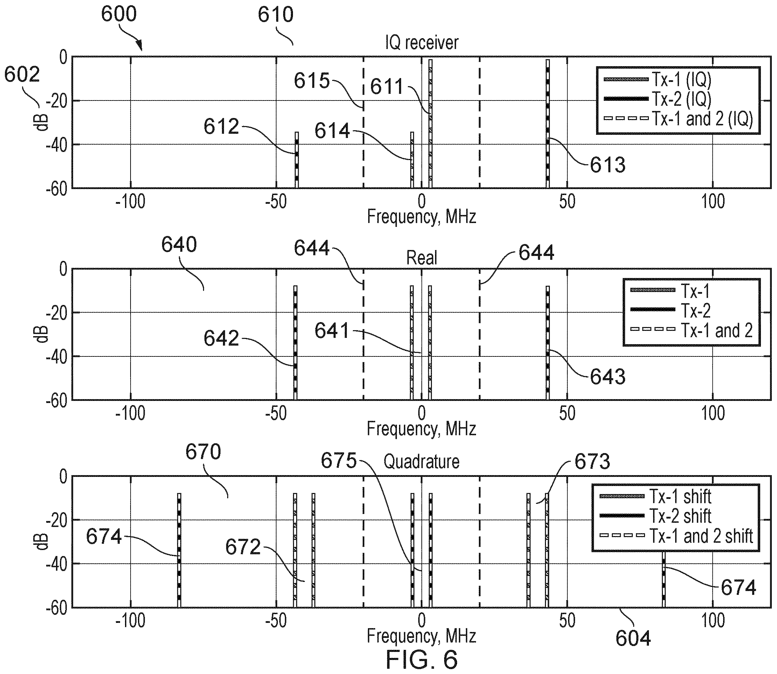

FIG. 6 illustrates a series of example spectra 600 (dB 602 vs frequency shift 604) of a beat signal for IQ MIMO, adapted according to examples herein described.

In the first (top) example spectrum 610, the spectra obtained from a typical IQ receiver with some imbalance, after the RF down-conversion mixer, is depicted. The positive spectrum has a first response 611 of the first Tx at a beat frequency around 4 Mhz, and its leakage 614 to the negative spectrum at -4 MHz due to hardware imperfections. The IQ imbalance leads to about -35 dB leakage of positive spectrum to the negative range, which should be ideally empty. The second Tx has a second response 613 at 44 MHz (due to an applied Tx-2 frequency shift $\delta_f$ = 40 MHz = = $f_{ADC}$ ADC sampling rate) and the corresponding IQ leakage in the negative spectrum at -44 Mhz 612. Here, the dashed lines 615 illustrate the pass band of anti-aliasing filter and ADC, such that the signal of the second Tx appears out of this band

$$f \in \left[ -\frac{f_{ADC}}{2}, \frac{f_{ADC}}{2} \right]$$.

In the second (middle) example spectrum 640, the spectra obtained in the real branch illustrates symmetric responses at 4 MHz and -4 MHz 641. In addition, the second example spectrum 640 shows the response of the second transmit Tx-2 signals at +44 MHz 643 and -44 MHz 642. Here, the dashed lines 644 show the cut-off frequencies of the LP anti-aliasing filter. Thus, any signals with absolute frequencies above these limits will be rejected and not captured by the ADC. Thus, the signal of Tx-2 is out of the ADC pass-band and will be removed by the LP anti-aliasing filter. Therefore, in this manner, the I branch captures the signal of Tx-1 only.

In the third (bottom) example spectrum 670, the spectra obtained illustrates a 'Q' branch after mixing with the applied frequency shift (i.e., after the second baseband mixer 366 in FIG. 3, 466 in FIG. 4). Here, the lines at 36 MHz, 44 MHz, identified as 673 and the lines at -36 MHz, -44 MHz, identified as 672, show the signal of Tx-1 that was shifted there by the real baseband mixer. These signals, together with the signals of Tx-2 at double the baseband mixer frequency 674, located at -76 and 76 MHz frequency shift, will be filtered out by the LPF. Thus, only Tx-2 appears in the band-pass frequencies of ADC and the 'Q' branch captures the signals of Tx-2 only at 4 and -4 MHz 675 (which are symmetric due to it being a real channel). Therefore, in this manner, signals of both Tx's can be isolated and processed for DOA estimation.

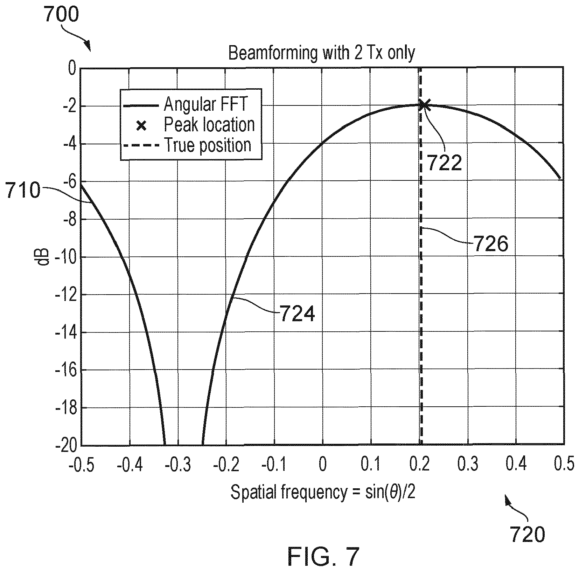

Referring now to FIG. 7, an example plot 700 of dB 710 versus spatial frequency 720 illustrates a beamforming direction of arrival (DOA) angular FFT estimation plot 724 for a point target with two Tx by one Rx MIMO radar using an IQ MIMO scheme according to examples herein described. The example plot 700 demonstrates an ability to estimate target DOA with the proposed scheme with an identification of a peak location 722 of -2dB at an identified true position 726 of a spatial frequency 720 of +0.2.

It is envisaged that the examples described herein may be used in MISO or in combination with other MIMO multiplexing techniques, such as CDMA, FDMA and Doppler division multiple access (DDMA). In DDMA, each transmitter is assigned a sub-band in the Doppler spectrum estimated via a slow-time FFT. The transmitters are therefore shifted by different frequencies in slow-time with respect to each other (where the phase is changed linearly over slow time differently per each Tx). Furthermore, in some examples, it is desired to realize imaging radars with a large number of Tx channels operating simultaneously and having an IQ receiver. Therefore, in some examples, all the supported transmitters are separated into two groups, where different multiplexing schemes may be applied in order to distinguish between transmitters within each group. For example, a radar with eight Tx operating simultaneously may be split into two groups of four Tx each by means of IQ MIMO, and within each group of four Tx's, e.g., DDMA coding may be applied to distinguish between the four Tx's in this group. Effectively, the number of transmitters that should be multiplexed is reduced by a factor of two as compared to the current (DDMA only) solution.

Although examples have been described with reference to a MISO or MIMO radar unit, it is envisaged that the concepts described herein, with similar created waveforms and receiver techniques, apply equally to sound navigation and ranging (sonar) or light, detection and ranging (lidar) communication units that are affected by quadrature imbalance or leakage.

In the foregoing specification, examples have been described with reference to specific example embodiments. It will, however, be evident that various modifications and changes may be made therein without departing from the scope of the invention as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example, in one embodiment, the illustrated examples may be implemented as circuitry located on a single integrated circuit or within a same device.

In some examples, the various components within the receiver can be realized in discrete or integrated component form, with an ultimate structure therefore being an application-specific or design selection. As the illustrated examples may, for the most part, be implemented using electronic components and circuits known to those skilled in the art, details will not be explained in any greater extent than that considered necessary as illustrated below, for the understanding and appreciation of the underlying concepts of the examples described and in order not to obfuscate or distract from the teachings described herein. A skilled artisan will appreciate that the level of integration of receiver circuits or components may be, in some instances, implementation-dependent.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A radar unit comprising a transceiver (200) comprising:

   a reference local oscillator, Ref LO (228) configured to generate a reference signal;
   a reference clock circuit (226) configured to output a clock signal;
   at least two transmitter paths, wherein each transmitter path comprises a phase rotator (222) configured to receive the reference signal and the clock signal, wherein the clock signal rotates a phase of the reference signal in at least one transmitter path, wherein a first frequency modulated continuous wave, FMCW, radar signal in a first transmitter path is shifted by a sampling frequency, Fs, with respect to a second FMCW radar signal in a second transmitter path, wherein each of the at least two transmitter paths comprise a power amplifier (224) configured to amplify a respective first FMCW radar signal or second FMCW signal and apply the respective amplified FMCW radar signal to a respective first transmit antenna or second transmit antenna (203);
   at least one receiver coupled a receive antenna (202) that receives a reflection of the FMCW radar signal, the receive antenna (202) coupled to two receiver paths;
   a down-conversion circuit (206) coupled to the Ref LO (228) and configured to down-convert the reflected FMCW radar signal in each receiver path to a baseband signal, wherein the down-conversion circuit (206) comprises a frequency shifter circuit (229) located in a first receiver path and configured to apply a frequency shift to either the received reflection of the FMCW radar signal or one path of the reference signal that down converts the reflection of the FMCW radar signal in the first receiver path to a baseband signal of a frequency band represented by the FMCW transmit signal following a frequency shift applied by the phase rotator (222);
   a band-pass filter (209) configured to filter the baseband signal in each receiver path, wherein a first bandpass filter in a first receiver path is configured to pass the baseband signal and a second bandpass filter in a second receiver path is configured to pass the baseband signal of the second transmitter path after an applied frequency shift has been removed; and

an analog to digital converter, ADC, circuit (210) configured to convert the filtered baseband signal in each receiver path to digital form; and

a digital signal processor, DSP (208), operably coupled to the at least one receiver and configured to process the digital form of the filtered, baseband signal and determine an angular dimension of the received reflected radar signal in response thereto.

2. The radar unit of Claim 1 wherein the frequency shift applied by phase rotator (222) in one of the at least two transmitter paths and the frequency shift applied by the frequency shifter circuit (229) in the first receiver path are each configured to be greater than or equal to an ADC sampling frequency, $\delta_f \geq f_s$, that is applied to one of the at least two transmitter paths and a received beat signal associated to the one of the at least two transmitter paths falls outside of a bandpass frequency of one receiver path.

3. The radar unit of Claim 1 or Claim 2 wherein the phase rotator (222) is configured to apply a frequency shift to at least one transmitter signal as a phase ramp at a clock rate of the reference clock circuit (226).

4. The radar unit of any preceding Claim wherein the down-conversion circuit (206) comprises a first down-conversion mixer in the first receiver path and a second down-conversion mixer in the second receiver path, wherein the clock signal from the reference clock circuit (226) creates a frequency shift that is input to a baseband mixer (466) coupled to an output of one of the two receiver paths in the down-conversion circuit (206).

5. The radar unit of Claim 4 wherein a tone at $\delta_f$ is applied to the baseband mixer (466) located prior to the bandpass filter and the ADC wherein the tone at $\delta_f$ is configured to frequency compensate for the frequency shift applied in the at least one of the transmitter paths.

6. The radar unit of Claim 4 or Claim 5 wherein the frequency shifter circuit (327C) comprises a fixed $\pi/2$ phase shift (427) and the baseband mixer (466) is selectively configured to receive the down-converted signal in response to a control signal applied to a by-pass switch (422), wherein the control signal is configured to switch the radar unit to operate as a multiple-in, multiple-out, MIMO, mode of operation or as a conventional radar receiver.

7. The radar unit of Claim 1 or Claim 2 wherein the frequency shifter circuit (229) comprises a phase rotator (322) operably coupled to a down-conversion mixer located in one receiver path of the two receiver paths and the frequency shifter circuit (229) is configured to apply a frequency shift to the reference signal that frequency compensates for the frequency shift after processing by the phase rotator (322) and the bandpass filter (209) and the ADC circuit (210).

8. The radar unit of any preceding Claim wherein the at least one receiver is a quadrature, IQ, receiver.

9. The radar unit of any preceding Claim wherein, the DSP (208) is configured to:

sum the digital form of the filtered, baseband signals provided by the ADC circuit (210) as real and complex parts and perform a range fast fourier transform, FFT (240), across both a positive spectrum and a negative spectrum; and

separate the real and complex parts using a FFT that applies:

$$F\big(Re(s(t))\big) = \frac{1}{2}\big(S(f^+) + S^*(f^-)\big),$$

$$F\big(Im(s(t))\big) = \frac{1}{2j}\big(S(f^+) - S^*(f^-)\big),$$

where $S(f) = F(s(t))$ are the frequency and time representation of the received digital signals, ()* denotes a complex conjugate and $S(f^+)$, $S(f^-)$ denote positive and negative spectrum parts respectively.

10. The radar unit of any preceding Claim wherein the ADC circuit (210) is configured to operate with a sampling frequency f_s configured to capture signal components corresponding to each of the at least two transmitter paths where each of them occupies a band of fs/2.

11. The radar unit of any preceding Claim wherein the radar transceiver (200) is configured to support one of: multiple input single output, MISO, communication, or multiple input multiple output, MIMO, communication.

12. An integrated circuit for a radar unit comprising a radar transceiver (200) according to any preceding Claim.

13. A method (500) of receiving two transmit radar signal in a radar unit, the method comprising:

generating (510) a reference signal by a reference local oscillator, Ref LO (228);
rotating (515), by a clock signal applied to a phase rotator (222), a phase of the reference signal in one of at least two transmitter paths that provides frequency modulated continuous wave, FMCW, radar signals where the signal of a first transmitter is shifted by a sampling frequency, Fs, with respect to a second transmitter;
amplifying and transmitting (520) a first FMCW radar signal from a first transmit antenna and a second FMCW radar signal from a second transmit antenna (203);
receiving (530) a reflected radar signal, and amplifying the received reflected radar signal in two receiver paths;
down-converting (550) the received amplified reflected radar signal in the two receiver paths, to baseband signals using the reference signal, comprising:

applying a frequency shift to either the received reflection of the FMCW radar signal in a first receiver path; or
applying a frequency shift to the reference signal that down converts the reflection of the FMCW radar signal in the first receiver path;

wherein the frequency shift shifts the reflection of the FMCW radar signal to a baseband signal of a frequency band represented by the FMCW transmit signal following a frequency shift applied by the phase rotator that compensates a frequency shift by the sampling frequency, Fs, applied in one of the transmit FMCW radar signals;
band-pass filtering (550) the baseband signals, wherein a first down-converted baseband signal of the received reflected radar signal is passed by a first bandpass filter in the first receiver path and a second down-converted baseband signal of the received reflected radar signal is passed by a second bandpass filter in a second receiver path;
analog to digital converting (560) the down-converted, filtered, baseband signal; and
digitally processing (570) a digital form of the down-converted, filtered, baseband signal.

14. The method of Claim 13 further comprising configuring the frequency shift applied by phase rotator (222) in one of the at least two transmitter paths and the frequency shift applied by the frequency shifter circuit (229) in the first receiver path to be each greater than or equal to an ADC sampling frequency, $\delta_f \geq f_s$, that is applied to one of the at least two transmitter paths and a received beat signal associated to the one of the at least two transmitter paths falls outside of a bandpass frequency of one receiver path.

15. The method of Claim 13 or Claim 14 further comprising applying a frequency shift to at least one transmitter signal as a phase ramp at a clock rate of a reference clock circuit (226).

FIG. 1 (Prior Art)

FIG. 2

EP 4 610 690 A1

327A

310 Input
206
320 Output
326A

322

Phase rotator ← Reference clock

222

Reference LO — 328A

327B

360 Input
206
362
366 Output

322

326B — Reference clock

328B — Reference LO

**FIG. 3**

327C

410 Input
206
462 466
422
420 Output

322

427 — π/2

326C Reference clock

328C Reference LO

327D

460 Input
206
470 Output

322

328D — Reference LO - 2

**FIG. 4**

**500**

generate a reference signal — 510

rotating, by a clock signal applied to a phase rotator, a phase of the reference signal in one of at least two transmitter paths that provides frequency modulated continuous wave, FMCW, radar signals where the signal of one Tx is shifted by the frequency Fs (ADC sampling frequency) with respect to a second Tx — 515

amplify and transmit a first FMCW radar signal from a first transmit antenna and a second FMCW radar signal from a second transmit antenna — 520

receive a reflected radar signal and amplifying the received reflected radar signal in two receiver paths — 530

down-convert the received reflected radar signal to baseband signals in the two receiver paths, by applying a frequency shift to the reference signal for one received FMCW radar signal or to the reference signal in one of the receiver paths, wherein the frequency shift shifts the reflection of the FMCW radar signal to a baseband signal of a frequency band represented by the FMCW transmit signal following a frequency shift applied by the phase rotator that compensates the shift applied in one of the transmit FMCW radar signals — 540

band-pass filtering: a first bandpass filter passes a first down-converted baseband signal in a first receiver path and a second bandpass filter passes a second down-converted baseband signal in a second receiver path — 550

ADC converting the down-converted filtered, baseband IQ signals to digital form — 560

Digitally processing the filtered, baseband signals by a DSP — 570

FIG. 5

FIG. 6

FIG. 7

**EUROPEAN SEARCH REPORT**

Europäisches
Patentamt
European
Patent Office
Office européen
des brevets

Application Number

EP 24 16 0609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | US 2013/069818 A1 (SHIRAKAWA KAZUO [JP] ET AL) 21 March 2013 (2013-03-21)<br>* paragraph [0028] *<br>* paragraph [0032] - paragraph [0035] *<br>* paragraph [0054] - paragraph [0055] *<br>* paragraph [0092] - paragraph [0108] *<br>* figures 1-12 * | 1-5,7,<br>10-15<br>6,8,9 | INV.<br>G01S7/03<br>G01S7/35<br>G01S13/34<br>G01S13/44<br>G01S13/58<br>G01S13/931 |
| Y<br>A | US 11 879 990 B2 (NXP BV [NL]) 23 January 2024 (2024-01-23)<br>* column 8, line 20 - column 9, line 9 *<br>* figures 1-8 * | 1-5,7,<br>10-15<br>6,8,9 | ADD.<br>G01S13/02 |
| A | US 2022/413093 A1 (LUO JUN [CN]) 29 December 2022 (2022-12-29)<br>* paragraph [0103] - paragraph [0133] *<br>* figures 1-6 * | 1-15 | |

TECHNICAL FIELDS
SEARCHED (IPC)

G01S

The present search report has been drawn up for all claims

| Place of search | Date of completion of the search | Examiner |
|---|---|---|
| Munich | 18 July 2024 | Köppe, Maro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 24 16 0609

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2024

| Patent document cited in search report | Publication date | Patent family member(s) | | Publication date |
|---|---|---|---|---|
| US 2013069818 A1 | 21-03-2013 | EP | 2573581 A1 | 27-03-2013 |
| | | JP | 5866917 B2 | 24-02-2016 |
| | | JP | 2013068433 A | 18-04-2013 |
| | | US | 2013069818 A1 | 21-03-2013 |
| US 11879990 B2 | 23-01-2024 | EP | 4099046 A1 | 07-12-2022 |
| | | US | 2022390558 A1 | 08-12-2022 |
| US 2022413093 A1 | 29-12-2022 | CN | 114746767 A | 12-07-2022 |
| | | US | 2022413093 A1 | 29-12-2022 |
| | | WO | 2021102693 A1 | 03-06-2021 |

EPO FORM P0459

For more details about this annex : see Official Journal of the European Patent Office, No. 12/82

**EP 4 610 690 A1**

**Patent documents cited in the description**

- US 20210173069 A1

- US 20080112519 A1